# EUROPEAN PATENT SPECIFICATION

(11) **EP 3 865 267 B1**
(45) Date of publication and mention of the grant of the patent: **14.12.2022**
(21) Application number: 20211803.0
(22) Date of filing: 04.12.2020
(51) Int. Cl.: B27D 5/00, B23Q 17/22, B27M 1/08

(54) **EDGE BANDER MACHINE FOR WOODEN WORKPIECES PROVIDED WITH A MEASURING DEVICE OF THE WORKPIECE POSITION AT THE ENTRY INTO THE MACHINE AND OPERATION METHOD THEREOF**
KANTENBESCHICHTUNGSVORRICHTUNG FÜR HOLZTEILE MIT MESSGERÄT FÜR DIE HOLZTEILPOSITION AM EINGANG DER VORRICHTUNG UND ZUGEHÖRIGES VERFAHREN ZU DESSSEN DURCHFÜHRUNG
PLAQUEUSE DE CHANTS POUR PIÈCES EN BOIS ÉQUIPÉE D'UN DISPOSITIF DE MESURE DE LA POSITION DE LA PIÈCE À L'ENTRÉE DE LA MACHINE ET SON PROCÉDÉ D'UTILISATION

(30) Priority: 12.02.2020 IT 202000002794
(43) Date of publication of application: 18.08.2021
(73) Proprietor: SCM Group S.p.A., 47921 Rimini (RN) (IT)
(72) Inventor: BRUCIATI, Francesco, 47921 RIMINI (IT)
(74) Representative: Tiburzi, Andrea

(56) References cited:
- EP-A2- 0 506 621
- DE-A1-102016 223 928
- US-A- 6 058 993

## Description

The present invention relates to an edge bander machine for workpieces made of wood, metal, ceramic, plastic, glass, fiberglass, and the like, in particular provided with a measuring device of the workpiece position at the entry into the machine.

The present invention also relates to the operation method of the machine.

More specifically, the invention relates to an edge bander machine of the above type, designed and manufactured in particular to check the alignment of the workpiece entering the machine with respect to a reference, and for the following adaptation of the machining tools based on any displacement of the workpiece, but which can be related to any machine, in which it is necessary to check the position of the input workpiece and subsequently adapt the machining tools.

In the following, the description will be directed to an edge bander machine for wooden pieces, equipped with a device for measuring the positioning of the workpiece entering the machine with respect to a reference and the subsequent correction of the processing, but it is clear that the same should not be considered limited to this specific use.

As is well known, there are currently edge bander machines for wooden workpieces used for finishing the edges of a workpiece.

In particular, edge bander machines are mainly used to remove the excess of the edge that is attached to a face of a wooden workpiece in previous processing stations.

In fact, it may happen that in some workpieces, the edge attached to a face of a workpiece exceeds in length with respect to the face itself, therefore it is necessary to remove the excess edge.

Known edge bander machines comprise a sliding support surface provided with an abutment element against which a face of the workpiece to be worked is rested.

Furthermore, said machines comprise machining tools that work the free face of the workpiece, opposite to that resting on the abutment element.

Said working tools are usually circular blades which cut excess portions of the edge attached to the faces of a wooden workpiece.

Usually, it is defined the head of the workpiece as the first face entering the machine and the tail of the workpiece as the second face of the workpiece entering the machine, a first blade is used to cut the excess of the edge at the head of the workpiece and a second blade is used to cut the excess of the edge in correspondence with the tail of the workpiece.

In these known machines, currently, in order to control the deviation of the workpiece with respect to the abutment element of the support plane, several feeler members are used, each one to control the deviation of a face aligned along a first axis, for example, the X-axis, and of the contiguous face, aligned according to a second axis, transverse to the first one, for example, the Y-axis.

It is clear that these known solutions involve the use of several devices to check the alignment of the workpiece along two axes and therefore involve a greater bulk and a more complex control process.

The relevant prior art also includes the patent applications DE 10 2016 223928 A1 and US 6 058 993 A. EP 0 506 621 A2 discloses a machine for working a workpiece made of wood, metal, ceramic, plastic, glass, fiberglass, comprising working groups of said workpiece, means for moving said workpiece configured for carrying said workpiece in said machine, and a logic control unit provided with a program for moving said working groups, said machine comprises at least one measuring device, operationally connected to said logic control unit, capable of measuring the displacement of said workpiece from a reference position and capable of sending said measurement to said logic control unit, so that said logic control unit is capable of adjusting the position of said working groups with respect to said workpiece during the working of said workpiece so as to compensate said displacement.

In light of the above, it is therefore an object of the present invention to provide an edge bander machine for wooden workpieces equipped with a device for measuring the position of the workpiece entering the machine which is easy to use and provides quick feedback.

Another object of the invention is to provide a reliable operation method of said machine.

It is therefore specific object of the present invention a machine for working a workpiece made of wood, metal, ceramic, plastic, glass, fiberglass, comprising working groups of said workpiece, means for moving said workpiece configured for carrying said workpiece in said machine, and a logic control unit provided with a program for moving said working groups, said machine being characterized in that it comprises at least one measuring device, operationally connected to said logic control unit, capable of measuring the displacement of said workpiece from a reference position and capable of sending said measurement to said logic control unit, so that said logic control unit is capable of adjusting the position of said working groups with respect to said workpiece during the working of said workpiece so as to compensate said displacement.

Further according to the invention, said measuring device is capable of measuring the position of said workpiece during the entry into said machine.

Preferably according to the invention, said logic control unit comprises nominal values of said reference position of said workpiece, and said logic control unit receives said measurements carried out by said measuring device, compares said measurements with said nominal values, if said measurements are different from said nominal values, said logic control unit modifies said program for moving said working groups.

Still according to the invention,said machine comprises a frame, a supporting plane, extending along a development axis, on which said workpiece to be worked is placed in a reference position, comprising a face to be worked, at least one first working group and one second working group, slidably coupled to said frame along said development axis, for working said face.

Further according to the invention, each of said first and second working group comprise a blade for working said face, said blades are capable of scoring said face, and said blades are movable along a sliding axis orthogonal to said development axis.

Preferably according to the invention, said logic control unit is configured for changing the position of said blades along said sliding axis, and/or said logic control unit is configured for changing the distance of said blades with respect to said workpiece, along said development axis.

Still according to the invention, said measuring device comprises at least one contact means capable of being in contact with said workpiece during the entry into said machine, at least one forcing means of said contact means capable of holding said contact means in contact with said workpiece, at least one signal means integral with said contact means at least one sensor capable of detecting the movement of said at least one signal means.

Further according to the invention, said at least one contact means is a contact roller, said at least one forcing means is a contact cylinder, said at least one signal means is a magnetic metric scale, said at least one sensor is a magnetic linear transducer.

It is further object of the present invention an operation method of an edge bander machine for working a workpiece made of wood, metal, ceramic, plastic, glass, fiberglass, comprising the steps of:
(a) providing said workpiece to be worked in a reference position;
(b) providing working means of said workpiece, movable according to a predefined working program, during the working of said workpiece;
(c) detecting the position of said workpiece with respect to said reference position;
(d) adjusting said working program of said working units 2, 3) according to the detection carried out in said step (c), during the working of said workpiece.

Further according to the invention, said step (c) is carried out by a measuring device which measures the position of said workpiece during the entry into said machine.

Still according to the invention, said step (c) comprises the following sub-steps:
(c1) comparing said measurements with nominal values of reference positions of said workpiece;
(c2) adjusting said working program of said working units, during the working of said workpiece, if said measurements differ from said nominal values.

The present invention will be now described, for illustrative but not limitative purposes, according to its preferred embodiments, with particular reference to the figures of the enclosed drawings, wherein:
figure 1 shows a perspective view of the edge banding machine for wooden workpieces provided with a device for measuring the position of the workpiece entering the machine, object of the present invention;
figure 2 shows a perspective view of a portion of the machine shown in figure 1;
figure 3 shows a perspective view of the measuring device included in the machine of figure 1;
figure 4 shows a top view of a part of the machine shown in figure 1;
figure 5 shows a perspective view of the part of the machine shown in figure 4.

In the various figures, similar parts will be indicated by the same reference numbers.

With reference to the attached figures, the edge bander machine M for wooden workpieces provided with a device for measuring the position of the workpiece entering the machine M, object of the present invention essentially comprises a support surface 1 of the workpiece P to be machined, a first 2 and a second 3 machining unit, a device 4 for measuring the position of the workpiece P, and a logic control unit U, which executes the machining program of said workpiece P.

Said logic control unit U is operatively connected with said first 2 and second 3 machining units, to control the movement on the basis of the machining program to be performed on said piece P.

Furthermore, said logic control unit U is operatively connected to said measuring device 4, to receive the signals corresponding to the measurements made.

In said logic control unit U there are stored nominal values of the reference positions of said workpiece P entering said machine M.

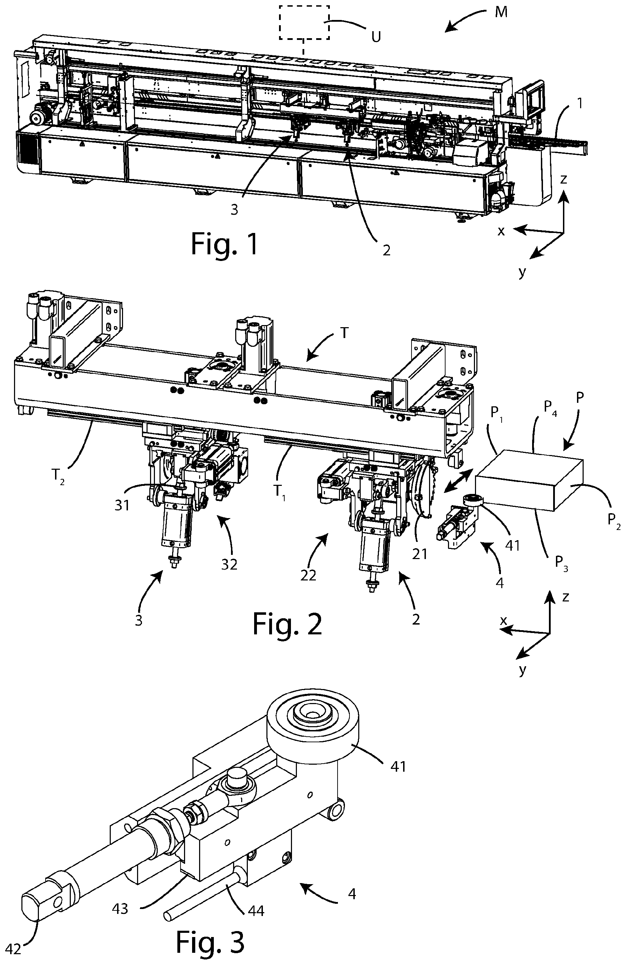

Said support plane 1 extends mainly along an X-axis of the Cartesian reference system XYZ shown in figure 1, and allows the support and movement of the workpiece P during the whole machining process, by means of handling means not shown in the figure.

Said workpiece P substantially comprises a first face P₁, also called head, a second face P₂, also called tail, a third face P₃, which is bordered or covered with an edge, and a fourth face P₄, opposite to said third face P 3.

By reference, or reference position of the workpiece P is meant an initial entry position of said workpiece P into the machine M, with respect for example to the Y-axis, orthogonal to said X-axis.

Said first machining group 2 and second machining group 3 are slidingly coupled to the frame T of the machine M, by means of a first guide T₁ and a second guide T₂, respectively, which extend substantially along said X-axis.

Each group of said first 2 and second 3 working group slide independently along said first guide T₁ and second guide T₂ respectively.

Said first processing unit 2 comprises a circular blade 21, and means 22 for moving said circular blade 21.

Similarly, said second processing unit 3 comprises a circular blade 31 and means 32 for moving said circular blade 31.

Said circular blade 21 of said first processing group 2, and circular blade 31 of said second processing group 3 are also movable along the Y-axis to come into contact with said third face P₃ of said piece P, to remove the excess edge attached on said third face P₃.

In particular, said circular blade 21 of said first processing group 2 contacts said third face P₃ at the head of the workpiece P, while said circular blade 31 of said second processing group 3 contacts said third face P₃ at the tail of workpiece P.

Said measuring device 4 is able to measure the position of the workpiece P entering the machine M, in particular, it is able to signal changes in the position of the piece P with respect to the reference position, counting the pulses sent by the sensor to the control logic unit U.

In particular, said device 4 comprises a rotating contact element 41, a contact cylinder 42, a metric scale 43, and a magnetic linear transducer 44.

In particular, said contact element 41 is a feeler wheel capable of being in continuous contact with said workpiece P during sliding.

Said contact cylinder 42 is able to actuate said contact element 41 so that it is always in contact with said piece P.

Said metric scale 43 is made of a magnetic material and it is coupled to said contact element 41.

Said magnetic linear transducer 44 is fixed and detects the variations in the position of said metric scale 43, following the displacement of said contact element 41.

Said magnetic linear transducer 44 is able to send a signal corresponding to the measurement of the displacement of said metric scale 43 to said logic control unit U, so that this unit controls the movement of said first 2 and second 3 machining units.

The operation of the machine M described above is as follows.

When a workpiece P to be machined is positioned on said support plane 1, it is aligned with respect to the reference position along the Y-axis.

Said workpiece P has said first face P₁ entering into said machine M and said second face P₂ at the tail, while said third face P₃ faces towards said first 2 and second 3 machining units.

Said workpiece P slides on said support surface 1, by means of the moving means, while said first 2 and second 3 machining units move respectively along said first T₁ and second T₂ guide according to the machining program being executed in said logic control unit U.

Said measuring device 4 continuously measures the position of said workpiece P with respect to said reference position.

When two consecutive measurements are different from each other, this indicates that the piece P has moved with respect to the reference position.

Said magnetic linear transducer 44 sends said measurements to said logic control unit U.

Said logic control unit U carries out a comparison between said measurements received by said magnetic linear transducer 44 and said nominal values.

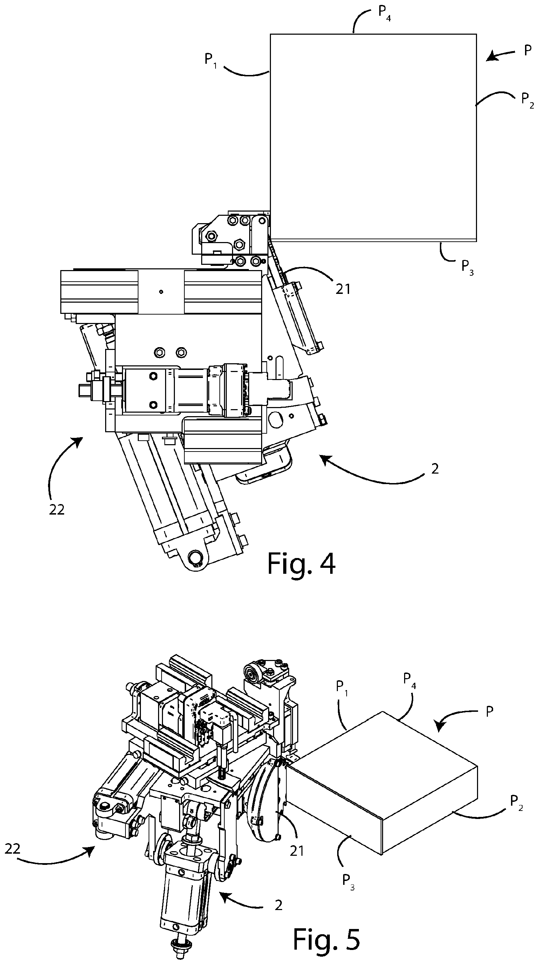

If said measurements differ from said nominal values, said logic control unit U activates said first 2 and second 3 processing units, so that said circular blade 21 of said first processing unit 2 and said circular blade 31 of said second processing unit machining 3 are moved by the respective moving means 22 and 32, so that the distance of said blades 21 and 31 along the X-axis with respect to the faces P₁ and P₂, P₃ of said workpiece P is adjusted, as shown in figure 4.

In this way, even if the workpiece P is not in the initial reference position, the excess of edge applied on said face P₃ is correctly removed, since the position of said circular blades 21 and 31 with respect to the faces P₁ and P₂ has been varied.

As is clear from the previous description, the machine M object of the present invention allows to quickly and by means of a single device measure the displacement of the piece P entering into the machine M and consequently to adjust the position of the machining tools, ensuring the correct execution of the processing.

## Claims

1. Edge bander machine (M) for working a workpiece (P) made of wood, metal, ceramic, plastic, glass, fiberglass, comprising
working groups (2, 3) of said workpiece (P),
means for moving said workpiece (P) configured for carrying said workpiece (P) in said machine (M), and
a logic control unit (U) provided with a program for moving said working groups (2, 3),
said machine (M) comprises
at least one measuring device (4), operationally connected to said logic control unit (U), capable of measuring the displacement of said workpiece (P) from a reference position and capable of sending said measurement to said logic control unit (U), so that said logic control unit (U) is capable of adjusting the position of said working groups (2, 3) with respect to said workpiece (P) during the working of said workpiece (P) so as to compensate said displacement,
a frame (T),
a supporting plane (1), extending along a development axis (X), on which said workpiece (P) to be worked is placed in a reference position, comprising a face (P3) to be worked,
at least one first working group (2) and one second working group (3), slidably coupled to said frame (T) along said development axis (X), for working said face (P3), and
one of said working groups (2, 3) is an edge bander group to apply an edge bander to said workpiece (P).

2. Machine (M) according to the preceding claim, **characterized in that** said measuring device (4) is capable of measuring the position of said workpiece (P) during the entry into said machine (M).

3. Machine (M) according to the preceding claim, **characterized in that**
said logic control unit (U) comprises nominal values of said reference position of said workpiece (P), and
**in that** said logic control unit (U) receives said measurements carried out by said measuring device (4), compares said measurements with said nominal values, if said measurements are different from said nominal values, said logic control unit (U) modifies said program for moving said working groups (2, 3).

4. Machine (M) according to any of the preceding claims, **characterized in that**
each of said first (2) and second (3) working group comprise a blade (21, 31) for working said face (P3),
**in that** said blades (21, 31) are capable of scoring said face (P3), and
**in that** said blades (21, 31) are movable along a sliding axis (Y) orthogonal to said development axis (X).

5. Machine (M) according to claim 4, **characterized**
**in that** said logic control unit (U) is configured for changing the position of said blades (21, 31) along said sliding axis (Y), and/or
**in that** said logic control unit (U) is configured for changing the distance of said blades (21, 31) with respect to said workpiece (P), along said development axis (X).

6. Machine (M) according to any one of the preceding claims, **characterized in that** said measuring device (4) comprises
at least one contact means (41) capable of being in contact with said workpiece (P) during the entry into said machine (M),
at least one forcing means (42) of said contact means (41) capable of holding said contact means (41) in contact with said workpiece (P),
at least one signal means (43) integral with said contact means (41),
at least one sensor (44) capable of detecting the movement of said at least one signal means (43).

7. Machine (M) according to the preceding claim, **characterized**
**in that** said at least one contact means (41) is a contact roller,
**in that** said at least one forcing means (42) is a contact cylinder,
**in that** said at least one signal means (43) is a magnetic metric scale,
**in that** said at least one sensor (44) is a magnetic linear transducer.

8. Operation method of an edge bander machine (M) in accordance of claim 1 for working a workpiece made of wood, metal, ceramic, plastic, glass, fiberglass, comprising the steps of:
(a) providing said workpiece (P) to be worked in a reference position;
(b) providing working means (2, 3) of said workpiece (P), movable according to a predefined working program, during the working of said workpiece (P);
(c) detecting the position of said workpiece (P) with respect to said reference position;
(d) adjusting said working program of said working units (2, 3) according to the detection carried out in said step (c), during the working of said workpiece (P).

9. Method according to the preceding claim, **characterized in that** said step (c) is carried out by a measuring device (4) which measures the position of said workpiece (P) during the entry into said machine (M).

10. Method according to claim 10 **characterized in that** said step (c) comprises the following sub-steps:
(c1) comparing said measurements with nominal values of reference positions of said workpiece (P);
(c2) adjusting said working program of said working units (2, 3), during the working of said workpiece (P), if said measurements differ from said nominal values.

## Patentansprüche

1. Kantenanleimmaschine (M) zum Bearbeiten eines Werkstücks (P) aus Holz, Metall, Keramik, Kunststoff, Glas, Glasfaser, umfassend Bearbeitungsgruppen (2, 3) des besagten Werkstücks (P), Mittel zum Bewegen des besagten Werkstücks (P), konfiguriert zum Transport des besagten Werkstücks (P) in der besagten Maschine (M), und eine logische Steuereinheit (U), die mit einem Programm zum Bewegen der besagten Arbeitsgruppen (2, 3) versehen ist,
die besagte Maschine (M) umfasst mindestens eine Messvorrichtung (4), die betriebsmäßig mit der Logiksteuereinheit (U) verbunden ist, die in der Lage ist, die Verschiebung des besagten Werkstücks (P) von einer Referenzposition zu messen und die besagte Messung an die besagte Logiksteuereinheit (U) zu senden, so dass die besagte Logiksteuereinheit (U) in der Lage ist, die Position der besagten Arbeitsgruppen (2, 3) in Bezug auf das besagte Werkstück (P) während der Bearbeitung des besagten Werkstücks (P) einzustellen, um so die besagte Verschiebung zu kompensieren,
einen Rahmen (T),
eine Stützebene (1), die sich entlang einer Entwicklungsachse (X) erstreckt, auf der das besagte zu bearbeitende Werkstück (P) in einer Referenzposition angeordnet ist, eine zu bearbeitende Fläche (P3) umfassend,
mindestens eine erste Arbeitsgruppe (2) und eine zweite Arbeitsgruppe (3), die verschiebbar mit dem Rahmen (T) entlang der Entwicklungsachse (X) gekoppelt sind, zum Bearbeiten der besagten Fläche (P3), und
eine der besagten Arbeitsgruppen (2, 3) ist eine Kantenanleimgruppe, um einen Kantenanleimer an dem besagten Werkstück (P) anzubringen.

2. Maschine (M) nach dem vorhergehenden Anspruch, **dadurch gekennzeichnet, dass** die besagte Messvorrichtung (4) in der Lage ist, die Position des besagten Werkstücks (P) während des Eintritts in die Maschine (M) zu messen.

3. Maschine (M) gemäß dem vorangegangenen Anspruch, **dadurch gekennzeichnet, dass** besagte Logiksteuereinheit (U) Nennwerte der besagten Referenzposition des besagten Werkstücks (P) umfasst, und
dass die besagte Logiksteuereinheit (U) die von der besagten Messvorrichtung (4) durchgeführten Messungen empfängt, die besagten Messungen mit den besagten Nennwerten vergleicht, und wenn die besagten Messungen von den besagten Nennwerten abweichen, besagte Logiksteuereinheit (U) das besagte Programm zum Bewegen der besagten Arbeitsgruppen (2, 3) ändert.

4. Maschine (M) nach einem der vorangegangenen Ansprüche, **dadurch gekennzeichnet, dass** jede der besagten ersten (2) und zweiten (3) Arbeitsgruppen eine Klinge (21, 31) zum Bearbeiten der besagten Fläche (P3) umfasst,
dass die besagten Klingen (21, 31) in der Lage sind, die Fläche (P3) einzukerben, und dass die besagten Klingen (21, 31) entlang einer Gleitachse (Y) orthogonal zu der besagten Entwicklungsachse (X) beweglich sind.

5. Maschine (M) gemäß Anspruch 4, **dadurch gekennzeichnet, dass** die besagte Logiksteuereinheit (U) konfiguriert ist zum Ändern der Position der besagten Klingen (21, 31) entlang der besagten Gleitachse (Y), und/oder dass die besagte Logiksteuereinheit (U) konfiguriert ist zum Ändern des Abstands der besagten Klingen (21, 31) in Bezug auf das besagte Werkstück (P) entlang der besagten Entwicklungsachse (X).

6. Maschine (M) von einem der vorangegangenen Ansprüche, **dadurch gekennzeichnet, dass** die besagte Messvorrichtung (4) wenigstens ein Kontaktmittel (41) umfasst, welches in der Lage ist, mit dem besagten Werkstück (P) während des Eintritts in die besagte Maschine (M) in Kontakt zu bleiben,
wenigstens ein Zwangsmittel (42) des besagten Kontaktmittels (41), fähig, das besagte Kontaktmittel (41) mit dem besagten Werkstück (P) in Kontakt zu halten, wenigstens ein Signalmittel (43), integral mit dem besagten Kontaktmittel (41),
wenigstens einen Sensor (44), fähig, die Bewegung des besagten
wenigstens einen Signalmittels (43) zu erkennen.

7. Maschine (M) gemäß dem vorangegangenen Anspruch, **dadurch gekennzeichnet,**
**dass** das besagte wenigstens eine Kontaktmittel 11 (41) eine Kontaktrolle ist,
**dass** das besagte wenigstens eine Zwangsmittel (42) ein Kontaktzylinder ist,
**dass** das besagte wenigstens eine Signalmittel (43) eine magnetische Messskala ist,
**dass** das besagte wenigstens eine Sensormittel (44) ein magnetischer linearer Wandler ist.

8. Betriebsmethode einer Kantenanleimmaschine (M) nach Anspruch 1, zur Bearbeitung eines Werkstücks aus Holz, Metall, Keramik, Kunststoff, Glas, Fiberglas, umfassend die Schritte:
(a) Bereitstellen des besagten zu bearbeitenden Werkstücks (P) in einer Referenzposition;
(b) Bereitstellen von Bearbeitungsmitteln (2, 3) des besagten Werkstücks (P) gemäß einem vordefinierten Arbeitsprogramm während der Bearbeitung des besagten Werkstücks (P);
(c) Erfassen der Position des besagten Werkstücks (P) in Bezug auf die besagte Referenzposition;
(d) Anpassen des besagten Arbeitsprogramms der besagten Arbeitseinheiten (2, 3) gemäß der in besagtem Schritt (c) durchgeführten Erfassung während der Bearbeitung des Werkstücks (P).

9. Verfahren nach dem vorhergehenden Anspruch, **dadurch gekennzeichnet, dass** der besagte Schritt (c) durch eine Messvorrichtung (4) ausgeführt wird, die die Position des besagten Werkstücks (P) während des Eintritts in die besagte Maschine (M) misst.

10. Verfahren nach Anspruch 10, **dadurch gekennzeichnet, dass** der Schritt (c) die folgenden Unterschritte umfasst:
(c1) Vergleichen der besagten Messungen mit Nennwerten von Referenzpositionen des besagten Werkstücks (P);
(c2) Anpassen des besagten Arbeitsprogramms der besagten Arbeitseinheiten (2, 3) während der Bearbeitung des besagten Werkstücks (P), wenn die besagten Messungen von den besagten Nennwerten abweichen.

## Revendications

1. Machine de plaqueuse de chants (M) pour usiner une pièce (P) de bois, de métal, de céramique, de plastique, de verre, de fibre de verre, comprenant des groupes de travail (2, 3) dudit moyen de pièce à usiner (P),
pour déplacer ladite pièce (P) configurée pour transporter ladite pièce (P) dans ladite machine (M), et une unité de commande logique (U) fournie avec un programme pour le déplacement desdits groupes de travail (2, 3),
ladite machine (M) comprend au moins un dispositif de mesure (4), connecté de manière fonctionnelle à ladite unité de commande logique (U), capable de mesurer le déplacement de ladite pièce (P) à partir d'une position de référence et capable d'envoyer ladite mesure à ladite unité de commande logique (U), de telle sorte que ladite unité de commande logique (U) est capable d'ajuster la position desdits groupes de travail (2, 3) par rapport auxdites pièces (P) lors de l'usinage de ladite pièce (P) de manière à compenser ledit déplacement,
un cadre (T),
un plan de support (1), s'étendant le long d'un axe de développement (X), sur lequel ladite pièce (P) devant être usinée est placée dans la position de référence, comprenant une face (P3) devant être usinée,
au moins un premier groupe de travail (2) et un second groupe de travail (3), couplé de manière coulissante audit cadre (T) le long d'un axe de développement (X), pour usiner ladite face (P3), et
un desdits groupes de travail (2, 3) représente un groupe de plaqueuse de chants pour appliquer une plaqueuse de chants à ladite pièce (P).

2. La machine (M) selon la revendication précédente est **caractérisée par le fait que** ledit dispositif de mesure (4) est capable de mesurer la position de ladite pièce (P) lors de l'entrée dans ladite machine (M).

3. Ladite machine (M) selon les revendications précédentes, est **caractérisée par**
**le fait que**
ladite unité de contrôle (U) comprend des valeurs nominales de ladite position de référence de ladite pièce (P), et
dans ladite unité de commande logique (U) elle reçoit lesdites mesures exécutées par ledit dispositif de mesure (4), compare lesdites mesures avec lesdites valeurs nominales, si lesdites mesures sont différentes à partir desdites valeurs nominales, ladite unité de commande logique (U) modifie ledit programme pour le déplacement des groupes de travail (2, 3).

4. La machine (M) selon l'une quelconque des revendications précédentes est **caractérisée par le fait que**
chacun des premiers (2) et seconds (3) groupes de travail comprend une lame (21, 31) pour usiner ladite face (P3), dans lesquels lesdites lames (21, 31) sont capables de marquer ladite face (P3), et lesdites lames (21, 31) sont mobiles le long d'un axe coulissant (Y) orthogonal audit développement de l'axe (X).

5. La machine (M) selon la revendication 4,
est **caractérisé**
**par le fait que** l'unité de commande logique (U) est configurée pour changer la position desdites lames (21, 31) le long dudit axe de coulissement (Y), et/ou ladite unité de commande logique (U) est configurée pour changer la distance desdites lames (21, 31) par rapport à ladite pièce (P), le long dudit axe de développement (X) .

6. Ladite machine (M) selon l'une quelconque des revendications précédentes, **caractérisés par le fait que** ledit dispositif de mesure (4) comprend
au moins un moyen de contact
(41) capable d'être en contact avec ladite
pièce (P) lors de l'entrée dans ladite machine (M),
au moins un moyen de forcer (42) lesdits moyens de contact
(41) capables de maintenir lesdits moyens de contact (41) en contact avec ladite pièce (P),
au moins un moyen de signal (43) intégral avec lesdits moyens de contact (41),
au moins un capteur (44) capable de détecter le mouvement d'au moins un desdits moyens de signal (43).

7. Ladite machine (M) selon les revendications précédentes, est **caractérisée par**
**le fait qu'**au moins un moyen de contact 11 (41) représente un cylindre contacteur,
dans au moins un desdits moyens de force (42) représente un cylindre de contact,
dans au moins desdits moyens de signal (43) représente une échelle métrique magnétique,
dans au moins un capteur (44) qui représente un transducteur linéaire magnétique.

8. La méthode de fonctionnement d'une plaqueuse de chants (M) conformément à la revendication 1 pour usiner une pièce faite de bois, métal, céramique, plastique, verre, fibre de verre, comprenant les étapes de:
(a) fournir ladite pièce (P) à être usiné dans une position de référence;
(b) fournir des moyens d'usinage (2, 3) de ladite pièce (P), mobile
selon un programme d'usinage prédéfini, lors du travail de ladite pièce (P);
(c) détecter la position de ladite pièce (P) par rapport à ladite position de référence;
(d) ajuster ledit programme d'usinage desdites unités de travail (2, 3) selon la détection exécutée lors de ladite étape (c), lors de l'usinage de ladite pièce (P).

9. La méthode selon la revendication précédente est **caractérisée par le fait que** l'étape (c) est exécutée par un dispositif de mesure (4) qui mesure la position de ladite pièce (P) lors de l'entrée de ladite machine (M) .

10. La méthode selon la revendication 10 est **caractérisée par le fait que** ladite étape (c) comprend les sous-étapes suivantes:
(c1) comparer lesdites mesures avec les valeurs nominales de la position de référence de ladite pièce (P);
(c2) ajuster ledit programme d'usinage de ladite unité d'usinage (2, 3), lors de l'usinage de ladite pièce (P), si ladite mesure diffère desdites valeurs nominales.
